(19) Europäisches Patentamt
European Patent Office
Office européen des brevets

(11) **EP 2 790 347 B1**

## (12) EUROPEAN PATENT SPECIFICATION

(45) Date of publication and mention
of the grant of the patent:
**06.01.2016  Bulletin 2016/01**

(51) Int Cl.:
*H04L 5/00* (2006.01)        *H04L 5/14* (2006.01)
*H04W 72/12* (2009.01)     *H04L 12/863* (2013.01)

(21) Application number: **13163573.2**

(22) Date of filing: **12.04.2013**

(54) **Method and device for transmitting buffered data from a base station of a wireless communication network to user equipments**

Verfahren und Vorrichtung zur Übertragung gepufferter Daten von einer Basisstation eines drahtlosen Kommunikationsnetzwerks an Benutzergeräte

Procédé et dispositif de transmission de données tamponnées provenant d'une station de base d'un réseau de communication sans fil à des équipements utilisateur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.10.2014  Bulletin 2014/42**

(73) Proprietor: **ALCATEL LUCENT**
**92100 Boulogne-Billancourt (FR)**

(72) Inventors:
• **Destounis, Apostolos**
**91620 Nozay (FR)**
• **Sayadi, Bessem**
**91620 Nozay (FR)**
• **Debbah, Mérouane**
**75014 Paris (FR)**
• **Assaad, Mohamad**
**92340 Bourg la Reine (FR)**

(74) Representative: **Sciaux, Edmond**
**Alcatel-Lucent International**
**148/152 route de la Reine**
**92100 Boulogne-Billancourt (FR)**

(56) References cited:
• **MIKAEL STERNAD ET AL: "Towards Systems Beyond 3G Based on Adaptive OFDMA Transmission", PROCEEDINGS OF THE IEEE, IEEE. NEW YORK, US, vol. 95, no. 12, December 2007 (2007-12), pages 2432-2455, XP011197861, ISSN: 0018-9219, DOI: 10.1109/JPROC. 2007.907119**
• **ALI PARANDEHGHEIBI ET AL: "Information theory vs. queueing theory for resource allocation in multiple access channels", PERSONAL, INDOOR AND MOBILE RADIO COMMUNICATIONS, 2008. PIMRC 2008. IEEE 19TH INTERNATIONAL SYMPOSIUM ON, IEEE, PISCATAWAY, NJ, USA, 15 September 2008 (2008-09-15), pages 1-5, XP031371817, ISBN: 978-1-4244-2643-0**

## Description

## Field of the Invention

The present invention relates to wireless communication networks with a Time Division Duplex (or TDD) mode.

## Background of the Invention

As it is known by those skilled in the art, in TDD networks comprising cells offering a multicarrier downlink, each carrier is associated to a time slot comprising a first part allowing user equipments to provide (or feed back) their channel state for this carrier and a second part for transmitting data, buffered into a queue of a base station, to a scheduled user equipment.

In such TDD networks each base station must know the instantaneous rates that are achievable in each carrier for each user equipment, in order to be able to properly schedule data downlink transmission to these user equipments. To this effect, each user equipment is supposed to provide (or feed back) values of the achievable instantaneous rates in the carriers it supports to the corresponding base station. However, in practice each base station receives feedback values (or channel state information) from few user equipments, which may lead to data transmission to user equipments in bad carriers (i.e. carriers (or channels) supporting low bit rates). Thus, each base station must devise a selective feedback scheme to strike a good balance between finding a good user equipment to transmit data to and leaving a big portion of the timeslots for data transmission.

In the case where all carriers (or channels) are known by a base station, the latter may use an algorithm ensuring finite data transmission delays. For instance, such an algorithm may schedule at each carrier n the user equipment having the maximum product of queue length ($Q_i(t)$) by achievable rate ($R_{in}(t)$), where $Q_i(t)$ is the queue length of user equipment i at the beginning of the timeslot t and $R_{in}(t)$ is the achievable rate of user equipment i for carrier n. This product is also referred to as the "weight" corresponding to user equipment i for carrier n, and this scheduling algorithm is also referred to as "MaxWeight". Unfortunately, a base station knows the user equipment queue lengths but it can only know the user equipment achievable rates through feedback. Therefore scheduling algorithms usually do not take into account the time needed to feed back channel state information, even if the feedback is done in TDD mode.

To improve the situation, it has been proposed to minimize the feedback rate and/or the bandwidth consumed by feedback when it is done in FDD mode (i.e. when feedback is done in a frequency band different from the one(s) used for data transmission). It has been also proposed (in FDD and/or TDD feedback) to maximize the total average throughput. However, in general this does not allow guaranteeing finite delays. Indeed, when a base station sequentially requests feedback from specific user equipments, it needs to know the channel statistics of every user equipment which may be unfeasible in practice. Moreover, when a base station has obtained the channel state of the user equipment having the biggest queue length and uses this channel state as a threshold for the other user equipments, this may be inefficient when the number of user equipments and/or the time for each user equipment to feed back becomes large since many user equipments will still feed back during the data transmission phase of the timeslots.

The document "Towards Systems Beyond 3G Based on Adaptive OFDMA Transmission" by Mikael Sternad et al., Proceedings of the IEEE, Vol. 95, No. 12, December 2007, discloses a channel-aware scheduling method for an OFDMA wireless system.

## Summary of the invention

So the invention aims notably at guaranteeing finite delays for as larger set of possible arrival rates as possible.

To this effect the invention notably provides a method, intended for allowing transmission of data to user equipments coupled to a base station of a wireless communication network with a time division duplex mode, and comprising:

- a step (i) during which, at the beginning of a timeslot associated to a carrier, the base station acquires channel states corresponding respectively to N carriers from a user equipment associated to a maximum data queue length and then broadcasts these acquired channel states to all user equipments coupled to it,

- a step (ii) during which each user equipment compares each one of its own channel states with the corresponding broadcasted channel state, and if it finds a channel state better than a corresponding broadcasted channel state, it transmits a value representative of this best channel state, corresponding to a carrier, to the base station, if a chosen condition is fulfilled, and

- a step (iii) during which the base station determines, amongst user equipments having transmitted a value, a user equipment having a maximum product of an associated data queue length by a channel state represented by a stored value and corresponding to the carrier associated to the current timeslot, and then transmits buffered data during this current timeslot to this determined user equipment.

Further embodiments of the method according to the invention may include additional characteristics considered separately or combined, and notably :

- the chosen condition refers to the importance of a value of a random variable following binomial distribution with success probability p that is computed by a user equipment when channel statistics are not known and when no additional signalling is allowed. The value representative of a best channel state at a concerned carrier being transmitted when this computed value is greater than a predefined threshold;

> for every carrier, the threshold may be the value of the channel state of the user with the biggest data queue length in the carrier that is acquired and broadcasted at step (i);
> the chosen probability p may be equal to a minimal value between a first value equal to one (1) and a second value equal to

$$\left( \frac{1-2\beta}{\beta} \cdot \frac{L}{KL + K - 3L - 1} \right), \text{ where L is}$$

a number of possible modulation and coding schemes that can be used for data transmission by the base station, K is the number of user equipments coupled to the base station and $\beta$ is a fraction of the timeslot offered to each user equipment to provide a best channel state;

- in step (i) the base station may first broadcast a pilot sequence on every carrier to the user equipments coupled to it in order they estimate their own channel states for these carriers.

Further embodiment of the invention also offers a computer program product comprising a set of instructions arranged, when it is executed by processing means, for performing a method such as the one above introduced to allow transmission of data to user equipments coupled to a base station of a wireless communication network with a time division duplex mode.

Still further embodiment of the invention also offers a device, intended for allowing transmission of data to user equipments coupled to a base station of a wireless communication network with a time division duplex mode, and comprising:

- a first processing means arranged, at the beginning of a timeslot associated to a carrier, for ordering its base station to acquire channel states, corresponding respectively to different carriers, from a user equipment associated to a maximum data queue length and then to broadcast these acquired channel states to all user equipments coupled to it, and

- a second processing means arranged for storing each value representative of a best channel state and received from a user equipment by its base station, corresponding to a carrier and better than a corresponding broadcasted channel state, for determining, amongst user equipments having transmitted a value, a user equipment having a maximum product of an associated data queue length by a channel state represented by a stored value and corresponding to the carrier associated to the current timeslot, and for ordering its base station to transmit buffered data during this current timeslot to the determined user equipment.

For instance, the first processing means may be arranged for ordering its base station to broadcast a pilot sequence on every carrier to the user equipments coupled to it in order they estimate their own channel states for these carriers.

Still further embodiment of the invention also offers a base station, intended for equipping a wireless communication network, and comprising a device such as the one above introduced.

**Brief Description of the Drawings**

Other features and advantages of the invention will become apparent on examining the detailed specifications hereafter and the appended drawings, wherein:

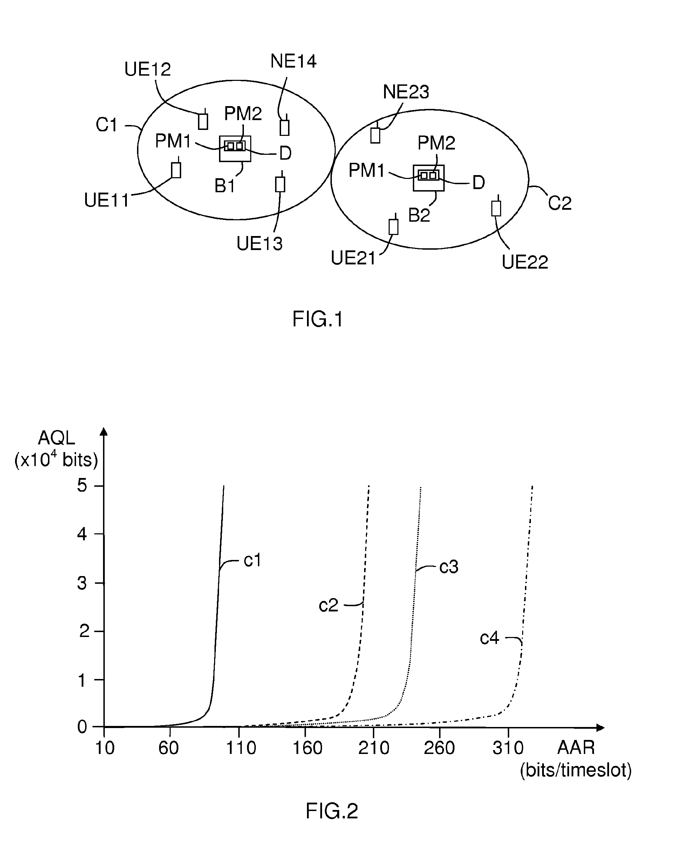

- figure 1 schematically and functionally illustrates a part of a wireless communication network comprising base stations, each comprising a device according to the invention, and
- figure 2 schematically illustrates in a diagram four average queue lengths (AQL) as a function of the average arrival rate (AAR) respectively in the case of a method of the art with K = 25 and $\beta$ = 0.1 (curve c1), a method of the art with K = 25 and $\beta$ = 0.05 (curve c2), a method according to the invention with K = 25 and $\beta$ = 0.1 (curve c3), and a method according to the invention with K = 25 and $\beta$ = 0.05 (curve c4).

The appended drawings may serve not only to complete the invention, but also to contribute to its definition, if need be.

**Detailed Description**

The invention aims, notably, at offering a method, and an associated device D, intended for allowing transmission of data to user equipments UEjk coupled to a base station Bj of a wireless communication network with a time division duplex (or TDD) mode.

In the following description it will be considered, as an example, that the wireless communication network is a cellular (or mobile) network, for instance of the UMTS or LTE type. But the invention is not limited to this type of wireless communication network. Indeed, it concerns any wireless communication network comprising at least one base station to which may be temporarily coupled several user equipments

Moreover, in the following description it will be considered, as an example, that the user equipments UEjk are smartphones. But the invention is not limited to this type of user equipment. Indeed, it concerns any type of mobile communication equipment capable of establishing wireless communications with other communication equipments via bases stations of a wireless communication network. So, a user equipment could be also a personal digital assistant, an electronic tablet, a laptop, or a connected game console.

A simplified example of TDD (wireless communication) network is illustrated in figure 1. In this example, the TDD network comprises two base stations Bj (j = 1 or 2) each associated to a cell Cj in which user equipments UEjk may establish wireless communications. Each base station Bj offers a multicarrier downlink (i.e. N carriers CAn (n = 1 to N)) for transmitting data or messages (or else requests) to the user equipments UEjk. For instance, N = 15.

In the non-limiting example, four user equipments UE1k (j = 1 and k = 1 to 4) are located into the first cell C1 and coupled the first base station B1, and three user equipments UE2k (j = 2 and k = 1 to 3) are located into the second cell C2 and coupled the second base station B2.

But the number of cells Cj of the TDD network can take any value as soon as it is equal to or greater than one (1).

As mentioned above, the invention notably proposes a method intended for allowing transmission of data to user equipments UEjk that are coupled to a base station Bj of the TDD network.

This method comprises first (i), second (ii) and third (iii) steps.

The first step (i), of the method, is implemented at the beginning of a timeslot TSn that is associated (or assigned) to a carrier CAn. During this first step (i) a base station Bj (for instance B1) acquires channel states, corresponding respectively to its N carriers, from a user equipment UEjk' (for instance k' = 1) that is associated to a maximum data queue length, and then broadcasts these acquired channel states to all the user equipments UEjk that are coupled to it (Bj).

It is recalled that a data queue is a part of a base station buffer where groups of data are temporarily stored before being sent to different user equipments UEjk. So, the data queue length is the number of bits defining the data of a buffered group. It is important to note that a queue of a user equipment UEjk is not associated to a particular (or dedicated) carrier CAn, but is depleted after the carrier allocation according to the number of data to be transmitted.

For a user equipment UEjk, a channel state associated to a carrier CAn may be a Channel Quality Indicator (or CQI), i.e. a measurement of the communication quality of this carrier CAn. For instance, a CQI may be an instantaneous rate that a base station Bj can achieve in a carrier CAn or the value of the instantaneous signal-to-interference-plus-noise ratio (or SINR) in carrier CAn at the user equipment UEjk.

For instance, during the first step (i) the base station Bj (here B1) may first broadcast a pilot sequence on every carrier CAn to all the user equipments UEjk that are coupled to it in order they estimate their own channel states for the N associated carriers CAn, and then be capable to transmit them when requested.

The first step (i) can be initiated by a device D equipping a base station Bj. To this effect a device D may comprise a first processing means PM1 that is arranged, at the beginning of a timeslot TSn associated to a carrier CAn, for ordering its base station Bj to acquire channel states, corresponding respectively to its different carriers CAn, from the user equipment UEjk' having (at the considered timeslot TSn) the maximum data queue length, and then to broadcast these acquired channel states to all the user equipments UEjk that are coupled to its base station Bj.

A second step (ii) of the method is performed by each user equipment UEjk during each current timeslot TSn of a carrier CAn, just after reception of the broadcasted acquired channel states. During a second step (ii) each user equipment UEjk compares each one of its own channel states (associated respectively to the N carriers CAn) with the corresponding broadcasted acquired channel state. Then, if a user equipment UEjk finds a channel state that is better than a corresponding broadcasted acquired channel state, it transmits a value representative of this best channel state (corresponding to a carrier CAn) to the base station Bj to which it is coupled if a chosen condition is fulfilled.

Now, if the achievable rate of a user equipment UEjk in a carrier CAn is not greater than the broadcasted one, then feedback about this carrier CAn from this user equipment UEjk is of no need for scheduling because the data queue of this user equipment UEjk will not be scheduled in this carrier CAn. Therefore, this user equipment UEjk does not send any feedback. Indeed, as will be detailed below, the objective is to find the user equipment UEjk with the biggest product MP(TSn) of queue length times channel state (or achievable rate) for the considered carrier CAn, and therefore if the broadcasted acquired channel state for this considered carrier CAn is the rate of the user equipment UEjk with the maximum queue length in the current timeslot TSn, a user equipment UEjk' with a smaller rate will have a smaller product MP(TSn).

For instance, the chosen condition may refer to the importance of a value of a random variable following binomial distribution with success probability p that is computed by a user equipment UEjk when the channel statistics are not known and when no additional signalling is allowed. If this computed value is greater than a predefined threshold, the value that is transmitted by this user equipment UEjk is its own achievable rate at the carrier CAn on which the latter is greater than the broadcasted corresponding one.

For every carrier CAn, the threshold is preferably the value of the rate (or more generally the channel state) of the user with the biggest data queue length in the carrier CAn that is acquired and broadcasted at step (i).

For instance, such a probability p may be equal to the minimal value between a first value equal to one (1) and a second value equal to $\left(\dfrac{1-2\beta}{\beta}\cdot\dfrac{L}{KL+K-3L-1}\right)$, where L is the number of possible modulation and coding schemes that can be used for data transmission by the base station Bj, K is the number of user equipments UEjk that are coupled to this base station Bj, and $\beta$ is a fraction of the timeslot TSn during which each user equipment UEjk is allowed to provide at least one best channel state. In this case, the mathematical expression of the probability is

$$p=\min\left(1,\frac{1-2\beta}{\beta}\cdot\frac{L}{KL+K-3L-1}\right).$$

The role of this probability p is to limit the number of user equipments UEjk feeding back their channel states, while maintaining a high probability that a "good" user equipment will be selected for data transmission.

A third step (iii) of the method is performed by a base station Bj during each current timeslot TSn of a carrier CAn, when the time dedicated to the value transmission in this timeslot TSn has just expired. During a third step (iii) a base station Bj first determines, amongst the user equipments UEjk having transmitted a value, a user equipment UEjk having a maximum product MP(TSn) of its associated data queue length $Q_k$(TSn) by a channel state $R_{kn}$(TSn) that is represented by a stored value and corresponds to the carrier CAn associated to the current timeslot TSn (so, MP(TSn) = $Q_k$(TSn)*$R_{kn}$(TSn)). Then the base station Bj transmits the buffered data, in the carrier CAn and during the remaining part of the current timeslot TSn, to the user equipment UEjk it has just determined. This transmission is done with the transmission scheme that corresponds to the achievable rate represented by the value transmitted (or fed back) by the determined user equipment UEjk.

The third step (iii) can be initiated by the device D equipping a base station Bj. To this effect the device D may comprise a second processing means PM2 that is arranged:

- for storing each value that is representative of a best channel state (received from a user equipment UEjk by its base station Bj and corresponding to a carrier CAn). Each identifier of such a user equipment UEjk is also stored to become part of a set Sjn
- for determining, amongst the user equipments UEjk having transmitted a value (i.e. belonging to the set Sj), the user equipment UEjk having the maximum product MP(TSn) corresponding to the carrier CAn associated to the current timeslot TSn, and

- for ordering its base station Bj to transmit buffered data during this current timeslot TSn to the determined user equipment UEjk.

Each device D may be made of software modules (and in this case it constitutes a computer program product comprising a set of instructions arranged for performing the first (i) and third (iii) steps of the method when it is executed by processing means of a base station Bj). But this is not mandatory. Indeed, it may be made of a combination of electronic circuit(s) (or hardware module(s)) and software modules

An example of performance offered by a method according to the invention is illustrated in the diagram of figure 2, in the case where all user equipments UEjk request a Poisson traffic with the same rates and where carriers CAn are fifteen (N = 15), independent and identically distributed across time. In this diagram the first curve c1 represents an average queue length (AQL) as a function of the average arrival rate (AAR) in the case of a method of the art with TSn = 1 ms, K = 25 and $\beta$ = 0.1, c2 represents an AQL as a function of the AAR in the case of a method of the art with TSn = 1 ms, K = 25 and $\beta$ = 0.05, c3 represents an AQL as a function of the AAR in the case of a method according to the invention with TSn = 1 ms, K = 25 and $\beta$ = 0.1, and c4 represents an AQL as a function of the AAR in the case of a method according to the invention with TSn = 1 ms, K = 25 and $\beta$ = 0.05.

As illustrated, when a curve increases in a very steep manner for some AARs, the delays experienced by the user equipments UEjk for bigger AARs become very big (as the corresponding queues become very big). In particular, it can be seen that, compared with a method of the art, the method according to the invention ensures relatively small queue lengths for a greater range of traffic requests. Moreover, the method according to the invention offers biggest relative gains as the number of user equipments and the time needed for value feedback increase more widely.

So, the invention allows a network to support more demanding user equipments, and thus more data traffic demands, due to a better utilization of resources.

The invention is not limited to the embodiments of method, device and base station described above, which are provided only as examples, but encompasses all alternative embodiments which may be considered by one skilled in the art within the scope of the claims hereafter.

**Claims**

1. Method for transmitting data to user equipments (UEjk) coupled to a base station (Bj) of a wireless communication network with a time division duplex mode, said method comprising a step (i) during which, at the beginning of a timeslot associated to a carrier, said base station (Bj) acquires channel states corresponding respectively to N carriers from a user equipment (UEjk') associated to a maximum data queue length and then broadcasts these acquired channel states to all user equipments (UEjk) coupled to it, a step (ii) during which each user equipment (UEjk) compares each one of its own channel states with the corresponding broadcasted channel state, and if it finds a channel state better than a corresponding broadcasted channel state, it transmits a value representative of this best channel state, corresponding to a carrier, to said base station (Bj) if a chosen condition is fulfilled, and a step (iii) during which said base station (Bj) determines, amongst user equipments (UEjk) having transmitted a value, a user equipment (UEjk) having a maximum product of an associated data queue length by a channel state represented by a stored value and corresponding to the carrier associated to the current timeslot, and then transmits buffered data during said timeslot to said determined user equipment (UEjk).

2. Method according to claim 1, wherein said chosen condition refers to the importance of a value of a random variable following binomial distribution with success probability p that is computed by a user equipment (UEjk) when channel statistics are not known and when no additional signalling is allowed, said value representative of a best channel state being transmitted when said computed value is greater than a predefined threshold.

3. Method according to claim 2, wherein for every carrier (CAn), said threshold is the value of the channel state of said user with the biggest data queue length in said carrier (CAn) that is acquired and broadcasted at step (i).

4. Method according to one of claims 2 and 3, wherein said chosen probability p is equal to a minimal value between a first value equal to one and a second value

equal to $\left( \dfrac{1-2\beta}{\beta} \cdot \dfrac{L}{KL+K-3L-1} \right)$, where

L is a number of possible modulation and coding schemes that can be used for data transmission by said base station (Bj), K is the number of user equipments (UEjk) coupled to said base station (Bj) and $\beta$ is a fraction of said timeslot offered to each user equipment (UEjk) to provide a best channel state.

5. Method according to one of claims 1 to 4, wherein in step (i) said base station (Bj) first broadcasts a pilot sequence on every carrier to said user equipments (UEjk) coupled to it in order they estimate their own channel states for said carriers.

6. Computer program product comprising a set of instructions arranged, when it is executed by processing means, for performing the method according to one of claims 1 to 5 to allow transmission of data to user equipments (UEjk) coupled to a base station (Bj) of a wireless communication network with a time division duplex mode.

7. Device (D) for transmitting data to user equipments (UEjk) coupled to a base station (Bj) of a wireless communication network with a time division duplex mode, wherein it comprises a first processing means (PM1) arranged, at the beginning of a timeslot associated to a carrier, for ordering said base station (Bj) to acquire channel states corresponding respectively to different carriers from a user equipment (UEjk') associated to a maximum data queue length and then to broadcast these acquired channel states to all user equipments (UEjk) coupled to it, and a second processing means (PM2) arranged for storing each value representative of a best channel state, received from a user equipment (UEjk) by said base station (Bj), corresponding to a carrier and better than a corresponding broadcasted channel state, for determining, amongst user equipments having transmitted a value, a user equipment (UEjk) having a maximum product of an associated data queue length by a channel state represented by a stored value and corresponding to the carrier associated to the current timeslot, and for ordering said base station (Bj) to transmit buffered data during said current timeslot to said determined user equipment (UEjk).

8. Device according to claim 7, wherein said first processing means (PM1) is arranged for ordering said base station (Bj) to broadcast a pilot sequence on every carrier to said user equipments (UEjk) coupled to it in order they estimate their own channel states for said carriers.

**Patentansprüche**

1. Verfahren für das Übertragen von Daten an Benutzergeräte (UEjk), die mit einem Zeitduplex-Modus an eine Basisstation (Bj) eines drahtlosen Kommunikationsnetzwerks gekoppelt sind, wobei besagtes Verfahren einen Schritt (i) umfasst, im Zuge dessen zu Beginn eines einem Träger zugeordneten Zeitschlitzes besagte Basisstation (Bj) von einem einer maximalen Datenwarteschlangenlänge zugeordneten Benutzergerät (UEjk') Kanalzustände erlangt, die jeweiligen N Trägern entsprechen, und diese erlangten Kanalzustände dann an alle Benutzergeräte (UEjk) sendet, die an besagte Basisstation gekoppelt sind, einen weiteren Schritt (ii), im Zuge dessen jedes Benutzergerät (UEjk) jeden seiner eigenen Kanalzustände mit dem entsprechenden gesendeten Kanalzustand vergleicht, wobei das betreffende Benutzergerät (UEjk) dann, wenn es einen Kanalzustand im Vergleich zu einem entsprechenden, gesendeten Kanalzustand für besser befindet, einen diesen besten, einem Träger zugeordneten Kanalzustand repräsentierenden Wert an besagte Basisstation (Bj) sendet, wenn eine ausgewählte Bedingung erfüllt ist, und einen Schritt (iii), im Verlauf dessen besagte Basisstation (Bj) unter solchen Benutzergeräten (UEjk), die einen Wert gesendet haben, ein Benutzergerät (UEjk) bestimmt, das ein maximales Produkt einer zugeordneten Datenwarteschlangenlänge hat, ihr zugeordnet durch einen Kanalzustand, repräsentiert durch einen gespeicherten Wert und dem Träger entsprechend, der dem aktuellen Zeitschlitz zugeordnet ist, woraufhin besagte Basisstation (Bj) dann die während besagten Zeitschlitzes gepufferten Daten an besagtes bestimmtes Benutzergerät (UEjk) sendet.

2. Verfahren nach Anspruch 1, wobei besagte ausgewählte Bedingung sich auf die Bedeutung eines Werts einer binominal verteilten Zufallsvariablen mit Erfolgswahrscheinlichkeit p bezieht, die von einem Benutzergerät (UEjk) berechnet wird, wenn die Kanalstatistiken nicht bekannt sind und wenn kein zusätzliches Signalisieren zulässig ist, wobei besagter Wert einen besten Kanalzustand repräsentiert, der übermittelt wird, wenn besagter berechneter Wert über einem vordefinierten Sollwert liegt.

3. Verfahren nach Anspruch 2, wobei besagter Sollwert für jeden Träger (CAn) der Wert des Kanalzustands besagten Benutzers mit der größten Datenwarteschlangenlänge in besagtem Träger (CAn) ist, der in Schritt (i) erlangt und gesendet wird.

4. Verfahren nach einem der Ansprüche 2 und 3, wobei besagte gewählte Wahrscheinlichkeit p gleich einem Mindestwert zwischen einem ersten, Eins entsprechenden Wert und einem zweiten, der Formel

$$\left( \frac{1-2\beta}{\beta} \cdot \frac{L}{KL+K-3L-1} \right)$$

entsprechenden Wert ist, wobei L eine Anzahl möglicher Modulations- und Codierungsschemen ist, die von besagter Basisstation (Bj) für die Datenübertragung verwendet werden können, K die Anzahl der Benutzergeräte (UEjk), die an besagte Basisstation (Bj) gekoppelt sind, und ß ein Bruchteil besagten Zeitschlitzes, der jedem Benutzergerät (UEjk) für die Bereitstellung des besten Kanalzustands angeboten wird.

5. Verfahren nach einem der Ansprüche 1 bis 4, wobei besagte Basisstation (Bj) in Schritt (i) zuerst auf jedem Träger eine Pilotsequenz an besagte Benutzergeräte (UEjk) sendet, die an sie gekoppelt sind, damit sie ihre eigenen Kanalzustände für besagte Träger abschätzen.

6. Computerprogramm-Produkt, einen Satz so angelegter Anweisungen umfassend, dass sie beim Ausführen durch Datenverarbeitungsmittel das Verfahren nach den Ansprüchen 1 bis 5 ausführen, um in einem drahtlosen Kommunikationsnetzwerk mit Zeitduplex-Modus die Übertragung von Daten an die Benutzergeräte (UEjk) zu ermöglichen, die an die Basisstation (Bj) gekoppelt sind.

7. Vorrichtung (D) für das Übertragen von Daten an Benutzergeräte (UEjk), die an eine Basisstation (Bj) eines drahtlosen Kommunikationsnetzwerks mit Zeitduplex-Modus gekoppelt sind, wobei die Vorrichtung ein erstes Datenverarbeitungsmittel (PM1) umfasst, dafür eingerichtet, um zu Beginn eines einem Träger zugeordneten Zeitschlitzes besagte Basisstation (Bj) anzuweisen, Kanalzustände einzuholen, die jeweils verschiedenen Trägern entsprechen, und zwar von einem Benutzergerät (UEj'), das einer maximalen Datenwarteschlangenlänge zugeordnet ist, und daraufhin besagte eingeholte Kanalzustände an alle Benutzergeräte (UEjk) zu senden, die an sie gekoppelt sind, und wobei die Vorrichtung dann ein zweites Datenverarbeitungsmittel (PM2) umfasst, dafür eingerichtet, jeden einen besten Kanalzustand repräsentierenden Wert zu speichern, der seitens besagter Basisstation (Bj) von einem Benutzergerät (UEjk) empfangen wird und einen Träger repräsentiert sowie besser ist, als ein entsprechender gesendeter Kanalzustand, um aus dem Kreis der Benutzergeräte, die einen Wert übermittelt haben, ein Benutzergerät (UEjk) mit einem maximalen Produkt einer von einem Kanalzustand zugeordneten Datenwarteschlangenlänge zu bestimmen, wobei der Kanalzustand von einem gespeicherten Wert repräsentiert wird, der dem Träger entspricht, der dem aktuellen Zeitschlitz zugewiesen ist, und um besagte Basisstation (Bj) anzuweisen, die während besagten aktuellen Zeitschlitzes gepufferten Daten an besagtes Benutzergerät (UEjk) zu übertragen.

8. Vorrichtung nach Anspruch 7, wobei besagtes erstes Datenverarbeitungsmittel (PM1) dafür ausgelegt ist, besagte Basisstation (Bj) anzuweisen auf jedem Träger eine Pilotsequenz an besagte Benutzergeräte (UEjk) zu senden, die an sie gekoppelt sind, damit sie ihre eigenen Kanalzustände für besagte Träger abschätzen.

**Revendications**

1. Procédé de transmission de données aux équipements d'utilisateur (UEjk) couplés à une station de base (Bj) d'un réseau de communication sans fil avec un mode de duplexage par répartition dans le temps, ledit procédé comprenant une étape (i) durant laquelle, au début d'un intervalle temporel associé à une porteuse, ladite station de base (Bj) acquiert des états de canal correspondant respectivement à N porteuses provenant d'un équipement d'utilisateur (UEjk') associé à une longueur de file d'attente de données maximum puis diffuse ces états de canal acquis vers tous les équipements d'utilisateur (UEjk) couplés à celle-ci, une étape (ii) durant laquelle chaque équipement d'utilisateur (UEjk) compare chacun de ses propres états de canal à l'état de canal diffusé correspondant, et s'il trouve un état de canal meilleur qu'un état de canal diffusé correspondant, il transmet une valeur représentative de ce meilleur état de canal, correspondant à une porteuse, à ladite station de base (Bj) si une condition choisie est remplie, et une étape (iii) durant laquelle ladite station de base (Bj) détermine, parmi des équipements d'utilisateur (UEjk) ayant transmis une valeur, un équipement d'utilisateur (UEjk) ayant un produit maximum d'une longueur de file d'attente de données associée par un état de canal représenté par une valeur stockée et correspondant à la porteuse associée à l'intervalle temporel actuel, puis transmet des données en mémoire tampon durant ledit intervalle temporel audit équipement d'utilisateur déterminé (UEjk).

**2.** Procédé selon la revendication 1, dans lequel ladite condition choisie se rapporte à l'importance d'une valeur d'une variable aléatoire suivant une distribution binomiale avec une probabilité de succès p qui est calculée par un équipement d'utilisateur (UEjk) lorsque des statistiques de canal ne sont pas connues et lorsqu'aucune signalisation supplémentaire n'est autorisée, ladite valeur représentative d'un meilleur état de canal étant transmise lorsque ladite valeur calculée est supérieure à un seuil prédéfini.

**3.** Procédé selon la revendication 2, dans lequel pour chaque porteuse (CAn), ledit seuil est la valeur de l'état de canal dudit utilisateur dont la longueur de file d'attente de données est la plus importante dans ladite porteuse (CAn) qui est acquis et diffusé à l'étape (i).

**4.** Procédé selon l'une des revendications 2 et 3, dans lequel ladite probabilité choisie p est égale à une valeur minimale entre une première valeur égale à un et une deuxième valeur égale à

$$\left( \frac{1-2\beta}{\beta} \cdot \frac{L}{KL + K - 3L - 1} \right),$$

où L est un nombre de schémas de modulation et de codage possibles qui peuvent être utilisés pour la transmission de données par ladite station de base (Bj), K est le nombre d'équipements d'utilisateur (UEjk) couplés à ladite station de base (Bj) et β est une fraction dudit intervalle temporel offert à chaque équipement d'utilisateur (UEjk) pour fournir un meilleur état de canal.

**5.** Procédé selon l'une des revendications 1 à 4, dans lequel à l'étape (i) ladite station de base (Bj) diffuse d'abord une séquence pilote sur chaque porteuse vers lesdits équipements d'utilisateur (UEjk) couplés à celle-ci afin qu'ils estiment leurs propres états de canal pour lesdites porteuses.

**6.** Produit de programme informatique comprenant un ensemble d'instructions conçu, lorsqu'il est exécuté par des moyens de traitement, pour exécuter le procédé selon l'une des revendications 1 à 5 pour permettre la transmission de données à des équipements d'utilisateur (UEjk) couplés à une station de base (Bj) d'un réseau de communication sans fil avec un mode de duplexage par répartition dans le temps.

**7.** Dispositif (D) pour transmettre des données aux équipements d'utilisateur (UEjk) couplés à une station de base (Bj) d'un réseau de communication sans fil avec un mode de duplexage par répartition dans le temps, ledit dispositif comprenant un premier moyen de traitement (PM1) conçu, au début d'un intervalle temporel associé à une porteuse, pour commander à ladite station de base (Bj) d'acquérir des états de canal correspondant respectivement à différentes porteuses provenant d'un équipement d'utilisateur (UEjk') associé à une longueur de file d'attente de données maximum puis de diffuser ces états de canal acquis vers tous les équipements d'utilisateur (UEjk) couplés à celle-ci, et un deuxième moyen de traitement (PM2) conçu pour stocker chaque valeur représentative d'un meilleur état de canal, provenant d'un équipement d'utilisateur (UEjk) par ladite station de base (Bj), correspondant à une porteuse et meilleur qu'un état de canal diffusé correspondant, pour déterminer, parmi les équipements d'utilisateur ayant transmis une valeur, un équipement d'utilisateur (UEjk) ayant un produit maximum d'une longueur de file d'attente de données associée par un état de canal représenté par une valeur stockée et correspondant à la porteuse associée à l'intervalle temporel actuel, et pour commander à ladite station de base (Bj) de transmettre des données en mémoire tampon durant ledit intervalle temporel actuel audit équipement d'utilisateur (UEjk) déterminé.

**8.** Dispositif selon la revendication 7, dans lequel ledit premier moyen de traitement (PM1) est conçu pour commander à ladite station de base (Bj) de diffuser une séquence pilote sur chaque porteuse vers lesdits équipements d'utilisateur (UEjk) couplés à celle-ci afin qu'ils estiment leurs propres états de canal pour lesdites porteuses.

FIG.1

FIG.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MIKAEL STERNAD et al.** Towards Systems Beyond 3G Based on Adaptive OFDMA Transmission. *Proceedings of the IEEE,* December 2007, vol. 95 (12